# EUROPÄISCHE PATENTSCHRIFT

(11) **EP 0 579 777 B1**
(45) Veröffentlichungstag und Bekanntmachung des Hinweises auf die Patenterteilung: **27.12.1996**
(21) Anmeldenummer: 92914793.2
(22) Anmeldetag: 08.07.1992
(51) Int. Cl.: G01S 7/03, H04B 1/48, G01S 7/40

(54) **SENDE-/EMPFANGSMODUL**
TRANSMIT/RECEIVE MODULE
MODULE EMETTEUR/RECEPTEUR

(30) Priorität: 11.02.1992 DE 4203932
(43) Veröffentlichungstag der Anmeldung: 26.01.1994
(73) Patentinhaber: Daimler-Benz Aerospace Aktiengesellschaft, 81663 München (DE)
(72) Erfinder: FELDLE, Heinz-Peter, D-7913 Senden/Wullenstetten (DE)
(74) Vertreter: Fröhling, Werner Otto, Dr.
(86) Internationale Anmeldenummer: EP9201536
(87) Internationale Veröffentlichungsnummer: WO9316396

(56) Entgegenhaltungen:
- WO-A-88/00760
- PATENT ABSTRACTS OF JAPAN vol. 8, no. 176 (E-260)14. August 1984 & JP-A-59 070 323
- GAAS IC SYMPOSIUM TECHNICAL DIGEST 13. Oktober 1987, PORTLAND, OREGON Seiten 147 - 148 G. H. NESBIT ET AL. 'Monolithic Transmit/Receive switch for millimeter-wave application'
- IGARSS '90, INTERNATIONAL GEOSCIENCE AND REMOTE SENSING SYMPOSIUM 20. Mai 1990, MARYLAND Seiten 2325-2328, XP146728 A. P. LUSCOMBE 'Internal Calibration of the Radarsat Synthetic Aperture Radar'

## Beschreibung

Die Erfindung betrifft einen Sende-/Empfangsmodul nach dem Oberbegriff des Patentanspruchs 1.

In vielen Anwendungen der Hochfrequenztechnik, z. B. der Radartechnik, ist es erforderlich, wahlweise einen Sendepfad, der im allgemeinen einen oder mehrere Hochfrequenz(HF)-Leistungsverstärker enthält, oder einen hochempfindlichen Empfangspfad an einen gemeinsamen Sende-/Empfangspfad, z. B. eine Radarantenne, zu koppeln. Dafür wird ein Sende-/Empfangs-schalter, der auch S/E-Weiche oder Duplexer genannt wird, verwendet.

In der Radartechnik wird dafür vielfach ein Zirkulator verwendet. Dieser ist in nachteiliger Weise mechanisch empfindlich, insbesondere gegenüber hohen Beschleunigungen, z. B. Stoß oder Schock, und besitzt außerdem lediglich einen vielfach nicht ausreichenden kleinen Temperatur-Arbeitsbereich. Ein Zirkulator besitzt ein relativ großes Volumen, so daß ein vielfach geforderter kleiner und leichter Aufbau, z. B. im Rahmen einer intergrierten Bauweise, nicht möglich ist. Soll eine Radaranlage beispielsweise zirkularpolarisierte Strahlung senden und/oder empfangen, so sind in nachteiliger Weise zwei Zirkulatoren erforderlich, die außerdem möglichst weit entfernt voneinander angeordnet werden müssen, damit eine störende magnetische Verkoppelung untereinander vermieden wird. Weiterhin ist ein Zirkulator ein teures Bauelement, so daß dessen Einsatz insbesondere bei phasengesteuerten Antennen ("phased array antennas") zu nachteilig hohen Kosten führt.

Alternativ dazu ist es möglich, einen sogenannten SPDT-Umschalter (single pole double throw) zu verwenden. Dieser ist in nachteiliger Weise lediglich für kleine Sendeleistungen, d. h. bis zu ungefähr 1 W, einsetzbar und ermöglicht außerdem keinen Schutz des Sendepfades gegen unzulässig hohe reflektierte HF-Leistungen, die z. B. von einem Strahlerelement empfangen werden.

Eine solche Anordnung ist aus der Druckschrift GAAS IC SYMPOSIUM TECHNICAL DIGEST, 13. Oktober 1987, PORTLAND, OREGON, G. H. NESBIT et al. "Monolithic Transmit/Receive switch for millimeter-wave application", bekannt. Dort wird ein Sende-/Empfangsumschalter ("T/R switch"), der in integrierbarer Halbleitertechnologie herstellbar ist, verwendet. Dieser Umschalter besteht im wesentlichen aus einer T-förmigen Streifenleitung mit Toren für eine Antenne, einen Sende- sowie einen Empfangsvertärker. An die T-förmige Streifenleitung sind außerdem mehrere Schaltdioden angeschlossen, die mittels einer Spaltspannung eine Sende-/Empfangsumschaltung ermöglichen.

Aus der Druckschrift Patents Abstracts of Japan, Vol. 8, Nr. 176 (E-260), 14. August 1984, &JP-A-59 070 323, 20. April 1984, ist weiterhin eine Sende- und Empfangsanordnung bekannt. Dabei wird im Sendefall ein Sendesignal durch einen ersten 3dB-Koppler in zwei Signale aufgeteilt. Diese werden durch jeweils einen Verstärker verstärkt und über HF-Schalter ("single-pole single-throw switches") einem zweiten 3dB-Koppler zugeleitet. Dort erfolgt eine Zusammenführung der beiden einzeln verstärkten Signale zu einem Sendesignal, das aus dem zweiten 3dB-Koppler ausgekoppelt wird über ein Sende-/Empfangstor, an welches eine Sende-/Empfangs-Antenne anschließbar ist. Im Empfangsfall gelangt ein von der Antenne empfangenes Signal über das Sende-/Empfangstor des zweiten 3dB-Kopplers an die beiden HF-Schalter, wird dort reflektiert und liegt danach an einem Empfangs-Ausgang des zweiten 3dB-Kopplers an. An diesen Empfangs-Ausgang ist ein Empfangsverstärker anschließbar.

Aus der WO-A-8 800 760 ist ein in Streifenleitungs-Technologie herstellbarer HF-Richtkoppler bekannt. Dieser enthält eine Hauptleitung, zu der im wesentlichen parallel dazu eine λ/4-Koppel-Leitung angeordnet ist. An deren beiden Enden ist jeweils ein aus einer Schaltdiode sowie aus passiven Bauelementen bestehendes Schaltnetzwerk angeordnet. Dieses ist mittels einer daran anlegbaren Schaltspannung umschaltbar.

Aus der Druckschrift IGARSS '90, INTERNATIONAL GEOSCIENCE AND REMOTE SENSING SYMPOSIUM, 20. Mai 1990, MARYLAND, A.P. LUSCOMBE "Internal Calibration of the Radarsat Synthetic Aperture Radar", ist eine Kalibrier-Anordnung für eine Sende-/Empfangsanordnung bekannt. Bei letzterer sind an vorgebbaren Eich- und/oder Meßstellen jeweils ein Richtkoppler in die Schaltungsanordnung eingefügt. Über die Richtkoppler sind Eich- sowie Meßsignale ein- oder auskoppelbar. Die Richtkoppler sind außerdem an eine Meß- und Auswerteschaltung angeschlossen. Damit ist eine Kalibrierung (Eichung) der Sende-/Empfangsanordnung durchführbar.

Der Erfindung liegt daher die Aufgabe zugrunde, eine gattungsgemäße Anordnung anzugeben, die insbesondere für mittlere bis hohe Sendeleistungen geeignet ist, die mechanisch robust ist, ein kleines Volumen besitzt und die in kostengünstiger Weise auf einem (Schaltungsträger-)Substrat integrierbar ist.

Diese Aufgabe wird gelöst durch die im kennzeichnenden Teil des Patentanspruchs 1 angegebenen Merkmale. Vorteilhafte Ausgestaltungen und/oder Weiterbildungen sind den Unteransprüchen entnehmbar.

Ein erster Vorteil der Erfindung besteht darin, daß bereits erprobte und kostengünstige HF-Bauelemente nutzbar sind, so daß eine kostengünstige und zuverlässige industrielle Fertigung möglich ist.

Ein zweiter Vorteil besteht darin, daß gute und stabile Sende-/Empfangseigenschaften in einem großen Betriebstemperaturbereich, z. B. von -55° C bis +120° C vorhanden sind.

Ein dritter Vorteil besteht darin, daß ein Sende-/Empfangsmodul bis zu einer Sendeleistung von z.B. 12 W auf einem Trägersubstrat, z. B. einem Keramiksubstrat, räumlich so klein und kostengünstig integrierbar ist, daß damit insbesondere eine Gruppenantenne, die bis zu mehreren tausend phasengesteuerten Einzelstrahlern enthalten kann, kostengünstig, mechanisch robust und mit geringem Gewicht herstellbar ist.

Ein vierter Vorteil besteht darin, daß die Anordnung weitgehend in planarer Schaltungstechnik ausführbar ist.

Die Erfindung wird im folgenden anhand von Ausführungsbeispielen unter Bezugnahme auf schematisch dargestellte Zeichnungen näher erläutert. Es zeigen:

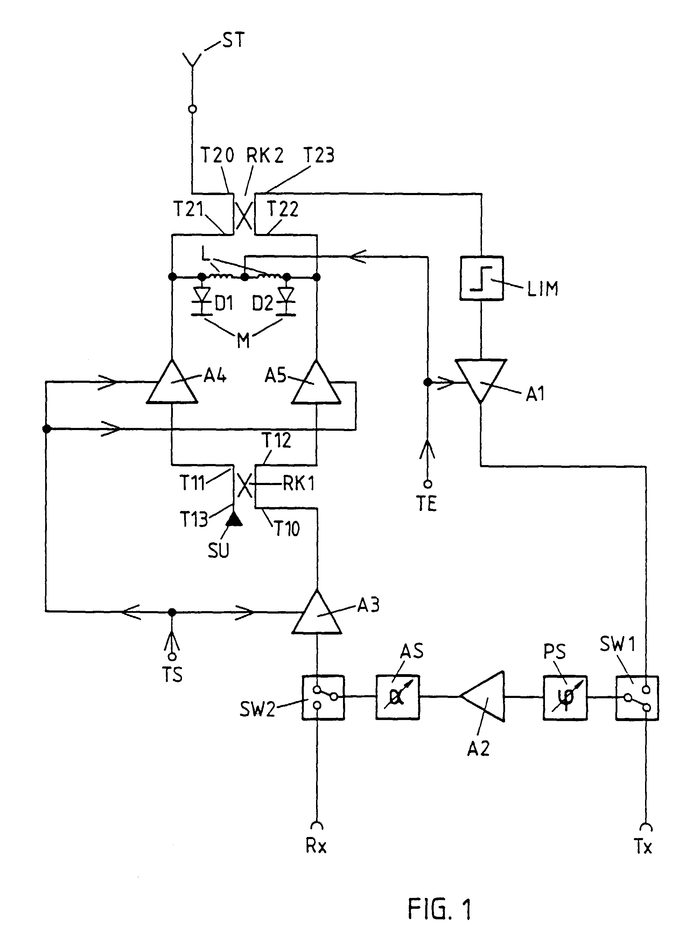

- FIG. 1-3: schematisch dargestellte elektrische Blockbilder zur Erläuterung der Beispiele.

Die Beispiele beziehen sich insbesondere auf die Anwendung in multifunktionalen, aktiven, phasengesteuerten Antennengruppen, beispielweise für Radaranlagen, die im Frequenzbereich von 5-6 GHz bzw. 9,5-10,5 GHz arbeiten, und bei der ein Einzelstrahler eine Sendeleistung von bis zu 10 W haben kann.

Das Ausführungsbeispiel gemäß FIG. 1 zeigt einen Sende-/Empfangsmodul (S/E-Modul) bestehend aus
- einem gemeinsamen Strahlerpfad,
- einer Sende-Empfangsweiche mit den wesentlichen Bestandteilen: zweiter Richtkoppler RK2, HF-Schalter D1, D2,
- einem Sendepfad, bestehend aus einem HF-Treiberverstärker A3, einem ersten Richtkoppler RK1 sowie den HF-Leistungsverstärkern A4, A5,
- einem Empfangspfad, bestehend aus einem Amplitudenbegrenzer LIM sowie einem rauscharmen Verstärker A1 und
- einem gemeinsamen Steuerpfad, bestehend aus den Sende-/Empfangsschaltern SW1, SW2 sowie einer zwischen diesen angeordneten Hintereinanderschaltung aus einem Phasensteller PS, einem Vorverstärker A2 sowie einem Amplitudensteller AS (Amplitudenabschwächer).

Im Sendefall (Sendemode) gelangt ein am Sendeeingang Tx anliegendes HF-Sendesignal, z. B. ein 5-6 GHz-Signal, über den ersten S/E-Umschalter SW1, den Steuerpfad PS, A2, A3 und den zweiten S/E-Umschalter SW2 auf den HF-Teiberverstärker A3, der z. B. eine HF-Leistung von 3 W hat. Dessen Ausgangssignal wird einem ersten Richtkoppler RK1 zugeführt, der ein sogenannter 3 dB-Richtkoppler ist und somit die im Tor T10 ankommende HF-Leistung im Verhältnis 1:1 auf die beiden Tore T11 und T12 aufspaltet.

Das direktionale Verhalten solcher 90°-Richtkoppler, z. B. sogenannter Längsseiten-Richtkoppler oder sogenannter Lange-Koppler, ist über den Abstand gekoppelter Leitungen bei der Entkopplung eines Richtkopplertores einstellbar. Parasitäre Signale durch eine möglicherweise nicht ideale Herstellung solcher Richtkoppler werden mittels eines HF-Sumpfes SU, z. B. eines ohmschen Widerstandes, in thermische Energie (Wärme) umgesetzt. Die an den Toren T11, T12 anliegenden HF-Ausgangssignale besitzen gleiche HF-Signalamplituden (3 dB-Koppler), sind jedoch in der Phase um 90° gegeneinander verschoben. Jedes dieser Signale wird in einem HF-Leistungsverstärker A4, A5 verstärkt, wobei diese beispielsweise eine maximale HF-Ausgangsleistung von 6 W besitzen. Die HF-Ausgangssignale der HF-Leistungsverstärker A4, A5 gelangen auf einen zweiten 3 dB-Richtkoppler RK2, der einen vergleichbaren Aufbau besitzt wie der erste 3 dB-Richtkoppler RK1, werden dort kombiniert und gelangen über das Tor T20 an eine Sende-/Empfangsantenne, z. B. einen Hohlleiterstrahler. Die Anordnung, bestehend aus den 3 dB-Richtkopplern RK1, RK2 sowie den HF-Leistungsverstärkern, ist als sogenannter balancierter Verstärker ausgebildet, wobei beide HF-Leistungsverstärker A4, A5 gleiche Verstärkungen und gleiche Phasengänge besitzen.

Im Empfangsfall wird das an dem Strahler ST empfangene HF-Empfangssignal dem zweiten Richtkoppler RK2 über dessen Tor T20 zugeleitet und an dem Tor T23 wieder ausgekoppelt, was nachfolgend noch genauer erläutert wird. Dann gelangt das HF-Empfangssignal über einen Amplitudenbegrenzer LIM, der insbesondere den nachgeschalteten rauscharmen Verstärker Al sowie den Sendepfad vor Zerstörung und Übersteuerung schützt, den Verstärker A1, den ersten S/E-Umschalter SW1, den Steuerpfad sowie den zweiten S/E-Umschalter SW2 an den Empfängerausgang Rx.

Zur Umschaltung von dem Sende- auf den Empfangsfall sind zwei HF-Schalter D1, D2, die vorteilhafterweise als HF-Halbleiterdioden ausgebildet sind, erforderlich. Jeweils einer dieser HF-Schalter D1, D2 ist mit einem Ausgang der HF-Leistungsverstärker A4, A5 verbunden. Dadurch ist es wahlweise möglich, diese Ausgänge mit der HF-Masse zu verbinden,so daß ein HF-mäßiger Kurzschluß entsteht, auch an den Toren T21, T22 des zweiten Richtkopplers RK2. Diese Umschaltung erfolgt mit Schaltmitteln TE, TS, beispielweise zweier schaltbarer Gleichspannungsquellen, sowie zweier Induktivitäten L, die ein unerwünschtes Ableiten von HF-Leistung vermeiden.

Im Sendefall werden die Verstärker A3, A4, A5 eingeschaltet, z. B. dadurch, daß deren Versorgungsspannungen mit Hilfe des Schaltmittels TS, z. B. einer Schaltspannung, eingeschaltet werden. Gleichzeitig werden über das weitere Schaltmittel TE, z. B. 0 V oder eine geringe negative Gleichspannung (bezogen auf die HF-Masse M), der rauscharme Verstärker Al abgeschaltet und damit geschützt, und die HF-Schalter D1, D2 in einen "Offen"-Zustand geschaltet, d. h., diese besitzen eine hohe HF-Impedanz (definierbarer HF-Leerlauf). Die dargestellten HF-Halbleiterdioden sind gesperrt. An den Toren T21, T22 ist kein HF-mäßiger Kurzschluß vorhanden. Ein HF-Sendesignal kann daher, wie beschrieben, über den Strahler ST ausgesandt werden. Dabei wird durch die Induktivitäten L ein störendes Ableiten von HF-Leistung vermieden.

Im Empfangsfall werden insbesondere die Ausgangssignale der Leistungsverstärker A4, A5 abgeschaltet und zweckmäßigerweise auch dasjenige des Treiberverstärkers A3. Dieses erfolgt durch das Schaltmittel TS. Durch das weitere Schaltmittel TE, z. B. eine bezüglich der HF-Masse M positive Gleichspannung, werden der rauscharme Verstärker A1 eingeschaltet und die HF-Schalter D1, D2 in einen "Geschlossen"-Zustand geschaltet, d. h., diese besitzen eine niedrige HF-Impedanz und stellen somit einen genau definierbaren HF-Kurzschluß dar. Dieser ist daher vorteilhafterweise unabhängig von den Ausgangsimpedanzen der Leistungsverstärker A4, A5 und deren möglicherweise undefinierten HF-Eigenschaften im abgeschalteten Zustand. Ein von dem Strahler ST, der nun als Antenne wirkt, empfangenes HF-Empfangssignal gelangt nun über das Tor T20 an den zweiten Richtkoppler RK2. Dort erfolgt eine 1:1 Aufteilung dieses Signals auf die Tore T21, T22, da das Tor T23 das entkoppelte Tor des 3 dB-Kopplers ist. Beide Signalanteile, welche die gleiche Amplitude und eine 90°-Phasenverschiebung zueinander besitzen, gelangen an die geschlossenen HF-Schalter D1, D2, die einen HF-Kurzschluß bilden. An diesen erfolgt eine Totalreflektion (r = -1) beider HF-Signale, die nun in den zweiten Richtkoppler RK2 zurücklaufen und dort konstruktiv so überlagert werden, daß eine im wesentlichen vollständige Auskopplung am Tor T23 (Empfangspfad) erfolgt. Am Tor T20 erfolgt eine destruktive Signalüberlagerung (Signalauslöschung), so daß das Empfangssignal vorteilhafterweise nicht wieder über den Strahler ST ausgesandt werden kann.

Es ist zweckmäßig, mit den Schaltmitteln TE, TS auch die S/E-Schalter SW1, SW2 zu betätigen, so daß diese auch auf den gewählten Sende- oder Empfangsfall umgeschaltet werden.

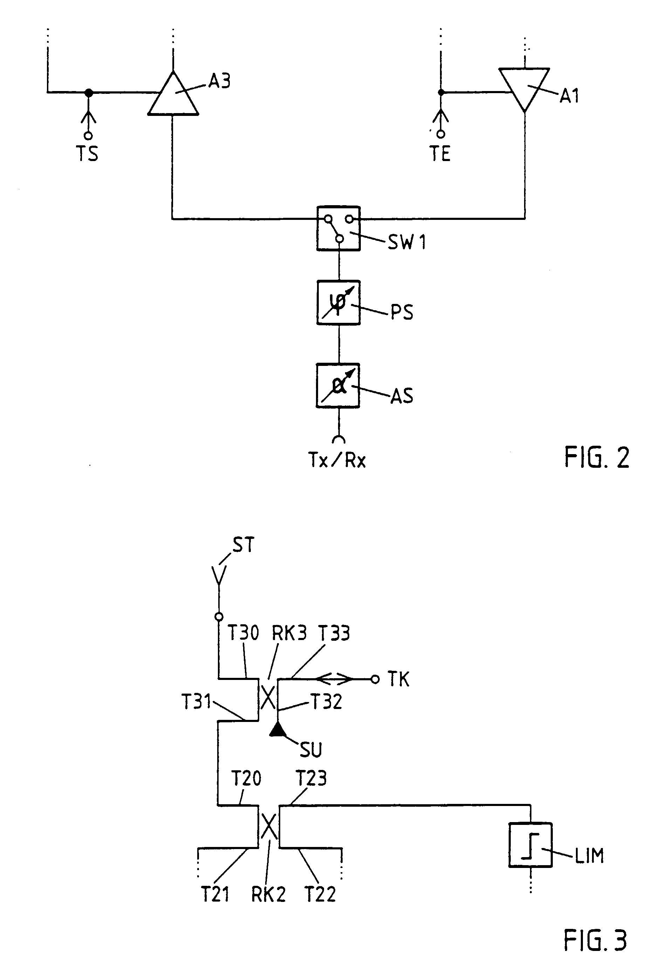

FIG. 2 zeigt ein Ausführungsbeispiel, das sich von demjenigen der FIG. 1 lediglich dadurch unterscheidet, daß nur ein einziger gemeinsamer Sende-/Empfangsanschluß Tx/Rx vorhanden ist. An diesem ist der gemeinsame Steuerpfad angeschlossen, der in diesem Fall lediglich aus einem Amplitudensteller A5 und einem Phasenschieber PS besteht. Es ist lediglich ein Sende-/Empfangsschalter SW1 erforderlich.

Bei den Ausführungsbeispielen gemäß Fig. 1 oder FIG. 2 ist es zusätzlich möglich, in dem gemeinsamen Strahlenpfad entsprechend FIG. 3 einen dritten Richtkoppler RK3 zwischen dem Strahler ST und dem zweiten Richtkoppler RK2 anzuordnen. Dieser dritte Richtkoppler RK3, der vorteilhafterweise als sogenannter 30 dB-Koppler ausgebildet ist, dient zum Testen und/oder Kalibrieren des Sende-/Empfangsmoduls. Bei dem dritten Richtkoppler RK3 ist dessen Tor T30 an den Strahler ST gekoppelt, Tor T31 ist mit Tor 20 (zweiter Richtkkoppler RK2) verbunden und Tor T32 ist mit einem HF-Sumpf (ohmscher Widerstand) abgeschlossen. An dem Tor 33 kann ein HF-Test- und/oder Kalibrierungssignal ein- und/oder ausgekoppelt werden.

Die Erfindung ist nicht auf die beschriebenen Ausführungsbeispiele beschränkt, sondern sinngemäß auf weitere anwendbar. Beispielsweise ist es möglich, für den dritten Richtkoppler RK3 einen 40 dB-Koppler oder einen 20 dB-Koppler zu verwenden.

## Patentansprüche

1. Sende-/Empfangsmodul für einen Hochfrequenzbereich, zumindest bestehend aus
- einem Sendepfad, der einen HF-Leistungsverstärker enthält,
- einem Empfangspfad, der einen rauscharmen Empfangsverstärker enthält,
- einer Sende-/Empfangsweiche, die eine Umschaltung von dem Sende- auf den Empfangspfad ermöglicht, und
- Schaltmitteln, mit denen in Abhängigkeit von einem daran anliegenden Schaltsignal wahlweise der Sendepfad oder der Empfangspfad betriebsbereit schaltbar sind,
dadurch gekennzeichnet,
- daß die Sende-/Empfangsweiche (RK2, D1, D2) als 3dB-Richtkoppler (RK2), an dessen entkoppeltem Tor (T23) der Empfangspfad (LIM, A1) angeschlossen ist, ausgebildet ist,
- daß der Sendepfad zumindest zwei HF-Leistungsverstärker (A4, A5) enthält, die zusammen mit der Sende-/Empfangsweiche (RK2) einen balancierten Verstärker bilden und die in Abhängigkeit von einem zugeführten Schaltsignal (TS) gemeinsam wahlweise ein- oder ausschaltbar sind,
- daß die Ausgänge der HF-Leistungsverstärker (A4, A5) unmittelbar an Tore (T21, T22) des 3dB-Richtkopplers (RK2) angeschlossen sind,
- daß an jedem Ausgang der HF-Leistungsverstärker (A4, A5) ein als Halbleiterdiode ausgebildeter HF-Schalter (D1, D2), durch welchen der HF-Ausgang kurzzuschließen ist, angeordnet ist,
- daß die mit den Ausgängen der HF-Leistungsverstärker (A4, A5) verbundenen Anschlüsse der HF-Schalter (D1, D2) über jeweils eine Induktivität (L), welche ein Abfließen von HF-Leistung vermeidet, an ein weiteres Schaltsignal (TE) zum gemeinsamen Ein- oder Ausschalten der HF-Schalter (D1, D2) angeschlossen sind, und
- daß das weitere Schaltsignal (TE) an den rauscharmen Empfangsverstärker (Al) angeschlossen ist zum Ein- oder Ausschalten desselben.

2. Sende-/Empfangsmodul nach Anspruch 1, dadurch gekennzeichnet, daß eine planare Schaltungsanordnung vorhanden ist, auf der zumindest eine HF-Ausgangsleitung eines HF-Leistungsverstärkers (A4, A5) als Streifenleitung ausgebildet ist.

3. Sende-/Empfangsmodul nach einem der vorherigen Ansprüche, dadurch gekennzeichnet, daß zwischen der Sende-/Empfangsweiche (RK2, D1, D2) und einem an diese angekoppelten Strahler (ST) ein dritter Richtkoppler (RK3) angeordnet ist.

4. Sende-/Empfangsmodul nach einem der vorherigen Ansprüche, dadurch gekennzeichnet, daß der dritte Richtkoppler (RK3) als 30 dB-Richtkoppler ausgebildet ist und daß über diesen ein Test- und/oder Kalibrierungssignal ein- und/oder auskoppelbar ist.

5. Sende-/Empfangsmodul nach einem der vorherigen Ansprüche, dadurch gekennzeichnet, daß zumindst einer der Richtkoppler (RK1, RK2, RK3) in Streifenleitungstechnik ausgeführt ist.

6. Sende-/Empfangsmodul nach einem der vorherigen Ansprüche, gekennzeichnet durch seine Verwendung in einer Radaranlage.

## Claims

1. Transmit-receive module for a high-frequency range, consisting at least of
- a transmit path, which comprises a high-frequency power amplifier,
- a receive path, which comprises a low-noise receive amplifier,
- a transmit-receive switch, which enables a changeover from the transmit path to the receive path, and
- switching means, by which in dependence on a switching signal present thereat the transmit path or the receive path is selectably switchable to operational readiness,
characterised thereby
- that the transmit-receive switch (RK2, D1, D2) is constructed as a 3 dB directional coupler (RK2), to the decoupled gate (T23) of which the receive path (LIM, A1) is connected,
- that the transmit path comprises at least two high-frequency power amplifiers (A4, A5), which together with the transmit-receive switch (RK2) form a balanced amplifier and which are switchable on or off in common in dependence on a supplied switching signal (TS),
- that the outputs of the high-frequency power amplifiers (A4, A5) are directly connected to the gates (T21, T22) of the 3 dB directional coupler (RK2),
- that a high-frequency switch (D1, D2), which is constructed as a semiconductor diode and by which the high-frequency output is to be short-circuited, is arranged at each output of the high-frequency power amplifiers (A4, A5),
- that those terminals of the high-frequency switches (D1, D2) that are connected with the outputs of the high-frequency power amplifiers (A4, A5) are each connected by way of a respective indutance (L), which avoids a draining of the high-frequency power, to a further switching signal (TE) for the switching-on or switching-off of the high-frequency switches (D1, D2) in common, and
- that the further switching signal (TE) is connected to the low-noise receive amplifier (A1) for the switching-on or switching-off of the same.

2. Transmit-receive module according to claim 1, characterised thereby that a planar circuit arrangement is present, on which at least one high-frequency output line of a high-frequency power amplifier (A4, A5) is constructed as a strip-line.

3. Transmit-receive module according to one of the preceding claims, characterised thereby that a third directional coupler (RK3) is arranged between the transmit-receive switch (RK2, D1, D2) and an emitter (ST) connected thereto.

4. Transmit-receive module according to one of the preceding claims, characterised thereby that the third directional coupler (RK3) is constructed as a 30 dB directional coupler and that a test signal and/or calibrating signal can be coupled in and/or coupled out by way of this.

5. Transmit-receive module according to one of the preceding claims, characterised thereby, that at least one of the directional couplers (RK1, RK2, RK3) is executed in strip-line technique.

6. Transmit-receive module according to one of the preceding claims, characterised by its use in a radar installation.

## Revendications

1. Module émetteur/récepteur pour une gamme de hautes fréquences, comprenant au moins
- un trajet d'émission contenant un amplificateur de puissance HF,
- un trajet de réception contenant un amplificateur de réception à faible bruit,
- un répartiteur émission/réception qui permet une commutation du trajet d'émission au trajet de réception et
- des moyens de commutation par lesquels, en fonction d'un signal de commande appliqué à eux, le trajet d'émission ou le trajet de réception peut sélectivement être rendu apte à fonctionner,
caractérisé en ce
- que le répartiteur émission/réception (RK2, D1, D2) est réalisé comme un coupleur directif à 3 dB (RK2), à la porte découplée (T23) duquel est raccordé le trajet de réception (LIM, A1),
- que le trajet d'émission contient au moins deux amplificateurs de puissance HF (A4, A5) qui, ensemble avec le répartiteur émission/réception (RK2), constituent un amplificateur symétrique et qui, en fonction d'un signal de commande (TS) appliqué, peuvent collectivement être enclenchés ou mis hors service à volonté,
- que les sorties des amplificateurs de puissance HF (A4, A5) sont connectées directement à des portes (T21, T22) du coupleur directif à 3 dB (RK2),
- qu'à chaque sortie des amplificateurs de puissance HF (A4, A5), est disposé un interrupteur HF (D1, D2) constitué par une diode à semi-conducteur et au moyen duquel la sortie HF peut être court-circuitée,
- que les bornes des interrupteurs HF (D1, D2) reliées aux sorties des amplificateurs de puissance HF (A4, A5), sont connectées chacune à travers une inductance (L) évitant une dérivation de puissance HF, à une source d'un signal de commande supplémentaire (TE) pour la fermeture ou l'ouverture collective des interrupteurs HF (D1, D2) et
- que le signal de commande supplémentaire (TE) est appliqué à l'amplificateur de réception à faible bruit (A1) en vue de l'enclenchement ou de l'arrêt de cet amplificateur.

2. Module émetteur/récepteur selon la revendication 1, caractérisé en ce qu'il comprend un circuit planaire sur lequel au moins une ligne de sortie HF d'un amplificateur de puissance HF (A4, A5) est réalisée sous la forme d'une ligne à ruban.

3. Module émetteur/récepteur selon une des revendications précédentes, caractérisé en ce qu'un troisième coupleur directif (RK3) est placé entre le répartiteur émission/réception (RK2, D1, D2) et un radiateur (ST) couplé à ce répartiteur.

4. Module émetteur/récepteur selon une des revendications précédentes, caractérisé en ce que le troisième coupleur directif (RK3) est un coupleur directif à 30 dB et qu'un signal de test et/ou d'étalonnage est applicable ou découplable à travers ce coupleur.

5. Module émetteur/récepteur selon une des revendications précédentes, caractérisé en ce que l'un au moins des coupleurs directifs (RK1, RK2, RK3) est réalisé selon la technique des lignes à ruban.

6. Module émetteur/récepteur selon une des revendications précédentes, caractérisé par son utilisation dans une installation radar.
